# EUROPEAN PATENT SPECIFICATION

(11) **EP 4 228 359 B1**
(45) Date of publication and mention of the grant of the patent: **22.10.2025**
(21) Application number: 20963105.0
(22) Date of filing: 30.11.2020
(51) Int. Cl.: H04L 5/00, H04B 7/06, H04B 7/0404

(54) **COMMUNICATION METHOD, COMMUNICATION APPARATUS, AND NETWORK DEVICE**
KOMMUNIKATIONSVERFAHREN, KOMMUNIKATIONSVORRICHTUNG UND NETZWERKVORRICHTUNG
PROCÉDÉ DE COMMUNICATION, APPAREIL DE COMMUNICATION ET DISPOSITIF DE RÉSEAU

(43) Date of publication of application: 16.08.2023
(73) Proprietor: Huawei Technologies Co., Ltd., Shenzhen, Guangdong 518129 (CN)
(72) Inventor: GU, Chuanli, Shenzhen, Guangdong 518129 (CN); SONG, Jian, Shenzhen, Guangdong 518129 (CN); TIE, Xiaolei, Shenzhen, Guangdong 518129 (CN)
(74) Representative: Thun, Clemens
(86) International application number: PCT/CN2020/132940
(87) International publication number: WO 2022/110217

(56) References cited:
- WO-A1-2020/192782
- WO-A1-2021/005764
- CN-A- 110 650 485
- CN-A- 111 262 679
- CN-A- 111 757 477
- US-A1- 2017 195 024
- US-A1- 2019 253 214
- US-A1- 2020 112 349

## Description

### TECHNICAL FIELD

This application relates to the field of communication technologies, and in particular, to a communication method by a terminal, a communication method by a network device, a terminal, a network device and corresponding computer program products.

### BACKGROUND

With the development of wireless communication technologies, various new services emerge, and different services have different resource requirements, so that various services in a future wireless network need to be capable of using limited channel resources more effectively. In a long term evolution (long term evolution, LTE for short) system and a 5G new radio (new radio, NR for short) system, a sounding reference signal (sounding reference signal, SRS for short) is a very important uplink signal. After user equipment (user equipment, UE for short) establishes a connection to a base station, the base station may allocate an SRS resource to the UE, and then estimate uplink channel quality by using an SRS sent by the UE. Particularly, in a time division duplex system, based on reciprocity between an uplink channel and a downlink channel, the base station may further estimate downlink channel quality based on the SRS sent by the UE, to perform downlink beamforming. Due to a time-varying characteristic of a wireless communication channel, if a sending periodicity of an SRS sent in a currently configured periodicity or an SRS sent in a semi-persistent manner is longer, a signal-to-noise ratio of the SRS is weaker. This affects channel estimation of a user and a throughput rate. However, if the sending periodicity is shorter, the SRS resource is insufficient for being allocated to each user for use.

In the conventional technology, theoretically, a range of SRS resources available to a user in each cell is limited. When allocating the SRS resources to the user in the cell, the base station usually considers only capability indication information reported during user access and a current status of base station resources, and allocates, to the user, an SRS resource that is not allocated in the range of the available SRS resources. This manner of performing one-time allocation only during user access has poor SRS resource usage flexibility and SRS resource utilization.

### AMENDED DESCRIPTION

The document WO 2020/192782 A1 shows a method, device and system for reporting SRS capabilities between a terminal and a network device. Especially, a reporting, based upon a high terminal device temperature or a low terminal device battery state is shown.

The document US 2020/0112349 A1 shows a sounding reference signal switching capability and configuration method and system.

The document US 2019/0253214 A1 shows a sounding reference signal antenna switching in scheduled entities with at least for antennas.

### SUMMARY

The present invention is defined by the independent claims. Further advantageous developments are shown by the dependent claims.

A technical problem to be resolved in embodiments of this application is to provide a communication method, a communication apparatus, and a network, to resolve a problem of low utilization efficiency due to inflexible allocation caused by limited SRS resources.

### BRIEF DESCRIPTION OF DRAWINGS

To describe the technical solutions in embodiments of this application or in the background more clearly, the following describes the accompanying drawings for describing embodiments of this application or the background.
FIG. 1 is a schematic diagram of an architecture of a communication system according to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of still another communication method according to an embodiment of this application;
FIG. 5 is a schematic diagram of composition of a communication apparatus according to an embodiment of this application;
FIG. 6 is a schematic diagram of composition of another communication apparatus according to an embodiment of this application;
FIG. 7 is a schematic diagram of composition of a network device according to an embodiment of this application; and
FIG. 8 is a schematic diagram of composition of another network device according to an embodiment of this application.

### DESCRIPTION OF EMBODIMENTS

The following describes embodiments of this application with reference to accompanying drawings in embodiments of this application.

The terms "include", "have", and any other variant thereof in the specification, claims, and the accompanying drawings of this application, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

For ease of description, embodiments of the present invention are described by using an LTE system or an NR system. Implementations in embodiments of the present invention are also applicable to another existing communication system and a future communication system with a higher level such as a 6G communication system or a 7G communication system. This is not limited in embodiments of the present invention.

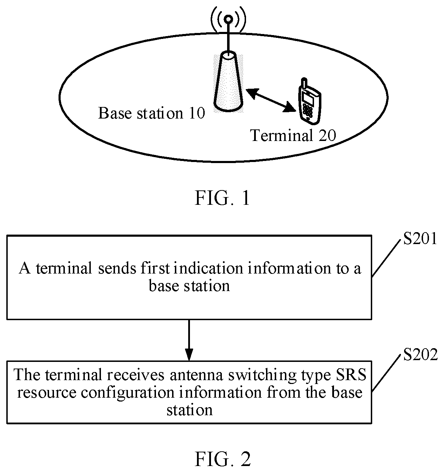

FIG. 1 is a schematic diagram of an architecture of a communication system according to an embodiment of this application. The communication system may include a network device and a communication apparatus. For ease of description, an example in which the network device is a base station 10 and the communication apparatus is a terminal 20 is used in FIG. 1 for description. In this architecture, the communication system may include the base station 10 and at least one terminal 20.

The network device may be a device that is in an access network and that communicates with and connects to a terminal over an air interface by using a sector. The network device may be configured to mutually convert a received over-the-air frame and an Internet Protocol (IP) packet and serve as a router between a terminal device and a rest portion of the access network, where the rest portion of the access network may include an IP network. The network device may further coordinate attribute management of the air interface. For example, the network device may be a base transceiver station (Base Transceiver Station, BTS for short) in a global system for mobile communications (Global System for Mobile Communications, GSM for short) or code division multiple access (Code Division Multiple Access, CDMA for short) technology, or may be a base station in wideband code division multiple access (Wideband Code Division Multiple Access, WCDMA for short), or may be an evolved base station in LTE, or may be an access point (Access Point, AP for short) in a wireless local area network (Wireless Local Area Network, WLAN for short), or a relay station, a vehicle-mounted device, a wearable device, a network device in a future 5G network, or a network device in a future evolved PLMN network, for example, a base station that may be connected to a 5G core network device, a transmission reception point (Transmission Reception Point, TRP for short), a central unit (Central Unit, CU for short), or a distributed unit (Distributed Unit, DU for short). This is not limited herein.

For example, the network device is a base station. The base station 10 may be an NR gNodeB (gNB), an evolved NodeB (evolved NodeB, eNB for short), a NodeB (NodeB, NB for short), a base station controller (Base Station Controller, BSC for short), a base transceiver station (Base Transceiver Station, BTS for short), a home base station (for example, a Home evolved NodeB, Home NodeB, HNB for short), a baseband unit (BaseBand Unit, BBU for short), or the like. A person skilled in the art may alternatively refer to the base station as a base station transceiver, a wireless base station, a wireless transceiver, a transceiver function, a base station subsystem (Base Station Subsystem, BSS for short), or some other appropriate terms. The base station is an entity, on a network side, configured to transmit a signal or receive a signal. In this embodiment of this application, the base station 10 may receive indication information sent by the terminal, and determine, based on an overall SRS resource usage status and the indication information sent by the terminal, an SRS resource to be allocated to the terminal.

The terminal 20 may also be referred to as user equipment (User Equipment, UE for short). The terminal may be deployed on land, including an indoor or outdoor device, a handheld device, a wearable device, or a vehicle-mounted device, or may be deployed on a water surface (for example, on a ship); or may be deployed in the air (for example, on a plane, a balloon, or a satellite). The terminal may also be referred to as a user terminal, a terminal device, an access terminal device, a vehicle-mounted terminal, an industrial control terminal, a UE unit, a UE station, a mobile station, a remote station, a remote terminal device, a mobile device, a UE terminal device, a mobile terminal, a wireless communication device, a UE agent, a UE apparatus, or the like. The terminal may alternatively be fixed, movable, or the like. A specific form of the terminal may be a mobile phone (mobile phone), a tablet computer (Pad), a computer having a wireless transceiver function, a virtual reality (VR) terminal device, an augmented reality (AR) terminal device, a wireless terminal in industrial control (industrial control), a vehicle-mounted terminal device, a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. The terminal is an entity, on a user side, configured to receive a signal or transmit a signal. In this embodiment of this application, the terminal 20 may send the indication information to the base station 10, to notify the base station of an SRS transmit port switching mode supported by the terminal, and include at least one antenna switching capability in the SRS transmit port switching mode supported by the terminal. A size of the SRS resource corresponding to the antenna switching capability is related to a quantity of SRS resources and a port quantity of the SRS resources. Therefore, the base station can learn of a current capability of the terminal, and dynamically adjust the allocated SRS resource.

For ease of description, only one terminal 20 is shown in this embodiment of this application. In an actual scenario, there may be one or more terminals 20. Some terminals may alternatively be used as transit devices, or may be used for transiting messages for some other terminals. In addition, a user group, and the like, may be formed between the terminals. This is not limited in embodiments of this application.

The following describes in detail communication methods and devices in embodiments of the present invention with reference to FIG. 2 to FIG. 8.

FIG. 2 is a schematic flowchart of a communication method according to an embodiment of this application. The communication method includes the following steps.

S201: A terminal sends first indication information to a base station.

The first indication information indicates an updated SRS transmit port switching mode supported by the terminal, and the updated SRS transmit port switching mode supported by the terminal includes at least one antenna switching capability.

S202: The terminal receives antenna switching type SRS resource configuration information from the base station.

In step S201, after the terminal accesses the base station, a working status of the terminal may dynamically change, and an external environment may also dynamically change. In this way, a requirement of the terminal for an SRS resource also changes. For example, as working duration of the terminal continuously prolongs, battery power of the terminal gradually decreases. When the battery power of the terminal decreases to a power threshold, the terminal may enter an energy saving mode. In this case, the requirement of the terminal for the SRS resource may also be correspondingly reduced. When the terminal is charged, the battery power of the terminal is restored to a value greater than the power threshold. In this case, the requirement of the terminal for the SRS resource may also be correspondingly increased. Therefore, the first indication information may notify the base station of a current requirement of the terminal for the SRS resource.

In a possible implementation, an SRS transmit port switching mode supported by the terminal during initial access may be indicated by using a supportedSRS-TxPortSwitch information element. For example, in the information element, a field indicating an antenna switching capability may be tlrl-tlr2, tlrl-tlr2-tlr4, tlrl-tlr2-t2r2-t2r4, t1r1-t1r2-t2r2-t1r4-t2r4, t1r1-t2r2, t1r1-t2r2-t4r4, or the like. When the field is t1r1-t1r2, the field indicates that the terminal supports two antenna switching capabilities: t1r1 and tlr2. t1r1 represents that the terminal supports one transmitter-one receiver antenna switching capability, and tlr2 represents that the terminal supports one transmitter-two receivers antenna switching capability.

When a field in the supportedSRS-TxPortSwitch information element is notsupport, the field indicates that the terminal does not support an SRS of an antenna switching (antenna switching, AS for short) type.

When the terminal determines that a preset condition is satisfied, the terminal may send the first indication information to the base station, so that the base station dynamically adjusts an allocated SRS resource based on the first indication information sent by the terminal. For example, the terminal may report, by using a ReducedMaxSrs-TxPortSwitch information element or an IncreasedMaxSrs-TxPortSwitch information element, the updated SRS transmit port switching mode supported by the terminal, so that the base station correspondingly reduces allocated SRS resources or increases allocated SRS resources.

For example, an SRS resource corresponding to the antenna switching capability may be understood as an SRS resource allocated by the base station to the terminal to enable the terminal to have an antenna switching capability. The SRS resource may include n SRS resources, and each of the n SRS resources may correspond to m ports. Therefore, a size of the SRS resource corresponding to the antenna switching capability may be measured based on a product of n multiplied by m (n*m). A larger product indicates a larger SRS resource corresponding to the antenna switching capability.

For example, the antenna switching capability corresponds to the SRS resource. To be specific, when the terminal has an antenna switching capability, the base station may allocate, to the terminal, an SRS resource corresponding to the antenna switching capability. A size of the SRS resource corresponding to the antenna switching capability is related to a quantity of SRS resources and a port quantity of the SRS resources. Generally, the base station allocates n SRS resources and m ports of each SRS resource to the terminal, and an antenna switching capability tₓr_{y} of the terminal corresponding to n and m needs to belong to one of updated SRS transmit port switching modes supported by the terminal. Generally, m=x, and n=y/x. For example, if an updated antenna switching capability of the terminal is tlr2, a quantity n of AS resources of the SRS resources allocated based on this capability is equal to 2, and a transmit port quantity of each SRS resource is equal to 1.

In another possible implementation, during initial access, the terminal may report, to the base station, a maximum quantity of uplink multiple-input multiple-output (multiple-input multiple-output, MIMO for short) layers of a code book (code book, CB for short)-type SRS resource supported by the terminal. For example, the terminal may report, by using a maxNumberMIMO-LayersCB-PUSCH information element, an initial maximum quantity of uplink MIMO layers of the CB-type SRS resource supported by the terminal. A possible value of the maxNumberMIMO-LayersCB-PUSCH information element is as follows:
oneLayer, twoLayers, or fourLayers, where oneLayer represents that the maximum quantity of uplink MIMO layers supported by the terminal is 1, twoLayers represents that the maximum quantity of uplink MIMO layers supported by the terminal is 2, and fourLayers represents that the maximum quantity of uplink MIMO layers supported by the terminal is 4. When the terminal determines that a preset condition is satisfied, the terminal may send the first indication information to the base station, so that the base station dynamically adjusts an allocated SRS resource based on the first indication information sent by the terminal. For example, the terminal may report, by using a ReducedMaxMIMO-Layers information element or an IncreasedMaxMIMO-Layers information element, an updated maximum quantity of uplink MIMO layers supported by the terminal, so that the base station correspondingly reduces allocated SRS resources or increases allocated SRS resources.

If a port quantity of a CB-type SRS resource allocated by the base station to the terminal is m, m is less than or equal to the maximum quantity of uplink MIMO layers supported by the terminal. Generally, the base station allocates a CB-type SRS resource to the terminal, to be specific, n=1. It is assumed that the maximum quantity of uplink MIMO layers supported by the terminal is twoLayers, the port quantity m of the SRS resource allocated by the base station to the terminal is 1 or 2.

In another possible implementation, during initial access, the terminal may report, to the base station, a maximum quantity of uplink multiple-input multiple-output (multiple-input multiple-output, MIMO for short) layers of a non code book (non code book, nonCB for short)-type SRS supported by the terminal. For example, the terminal may report, by using a maxNumberMIMO-LayersNonCB-PUSCH information element, an initial maximum quantity of uplink MIMO layers of the CB-type SRS resource supported by the terminal. A possible value of the maxNumberMIMO-LayersNonCB-PUSCH information element is as follows:
oneLayer, twoLayers, or fourLayers, where oneLayer represents that the maximum quantity of uplink MIMO layers supported by the terminal is 1, twoLayers represents that the maximum quantity of uplink MIMO layers supported by the terminal is 2, and fourLayers represents that the maximum quantity of uplink MIMO layers supported by the terminal is 4. When the terminal determines that a preset condition is satisfied, the terminal may send the first indication information to the base station, so that the base station dynamically adjusts an allocated SRS resource based on the first indication information sent by the terminal. For example, the terminal may report, by using a ReducedMaxMIMO-Layers information element or an IncreasedMaxMIMO-Layers information element, an updated maximum quantity of uplink MIMO layers supported by the terminal, so that the base station correspondingly reduces allocated SRS resources or increases allocated SRS resources.

If a port quantity of a nonCB-type SRS resource allocated by the base station to the terminal is m, m is less than or equal to the maximum quantity of uplink MIMO layers supported by the terminal. Generally, the base station allocates a nonCB-type SRS resource to the terminal, to be specific, n=1. It is assumed that the maximum quantity of uplink MIMO layers supported by the terminal is twoLayers, the port quantity m of the SRS resource allocated by the base station to the terminal is 1 or 2.

The foregoing three possible implementations may be simultaneously performed, or may be independently performed based on an SRS type supported by the terminal. This is not limited in embodiments of this application.

In the foregoing three possible implementations, during initial access, the terminal may further report, by using maxNumberSRS-Ports-PerResource, an initial maximum port quantity corresponding to a single SRS resource that can be supported by the terminal. A possible value of maxNumberSRS-Ports-PerResource is as follows:
1, 2, or 4.

When the terminal determines that a preset condition is satisfied, the terminal may send the first indication information to the base station, so that the base station dynamically adjusts an allocated SRS resource based on the first indication information sent by the terminal. For example, the terminal may report, by using reducedmaxNumberSRS-Ports-PerResource or IncreasedmaxNumberSRS-Ports-PerResource, an updated maximum port quantity corresponding to the single SRS resource that can be supported by the terminal. In this way, the base station correspondingly reduces allocated SRS resources or increases allocated SRS resources.

If a port quantity of a single SRS resource of any type allocated by the base station to the terminal is m, m is less than or equal to the maximum port quantity corresponding to the single SRS resource that can be supported by the terminal.

Generally, a quantity of resources occupied by an SRS resource whose port quantity is 2 is greater than a quantity of resources occupied by an SRS resource whose port quantity is 1. However, a quantity of resources occupied by two SRS resources whose port quantities are one may be the same as a quantity of resources occupied by one SRS resource whose port quantity is two. Optionally, as defined by the base station, the quantity of resources occupied by the two SRS resources whose port quantities are one is greater than the quantity of resources occupied by the SRS resource whose port quantity is two. For example, quantities of occupied resources are sorted in a sequence of tlrl<tlr2<t2r2<t2r4. The base station can flexibly and dynamically allocate, in an adaptive manner, the SRS resource based on a capability reported by the terminal and an SRS resource status on a network side, to improve SRS resource allocation flexibility and SRS resource utilization.

Optionally, the first indication information may be carried in user equipment assistance information (UE Assistance Information) or overheating assistance information (Overheating Assistance).

After the terminal completes access, the terminal may be dynamically triggered, based on the status of the terminal or the change of the external environment, to send the indication information to the base station, to notify the base station of the current capability of the terminal or the current requirement of the terminal for the SRS resource, so that the base station can dynamically adjust the SRS resource allocated to the terminal. This improves the SRS resource allocation flexibility and the SRS resource utilization.

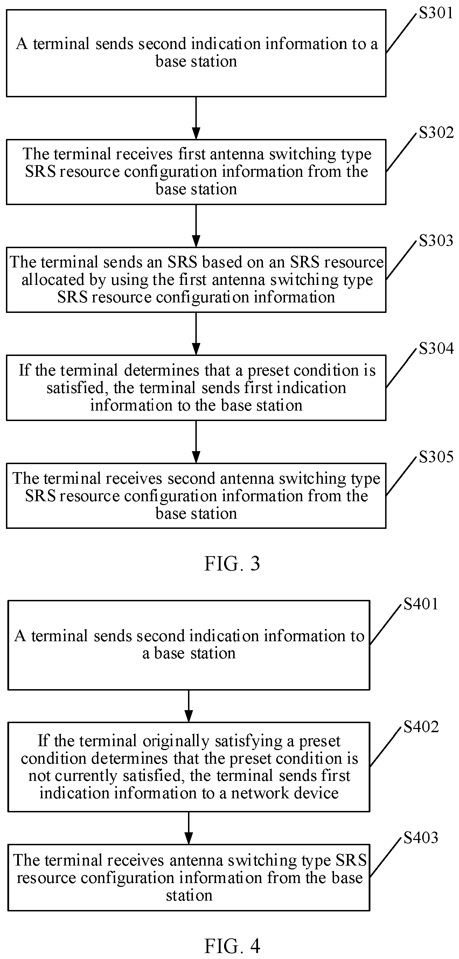

The working status of the terminal may change from normal to abnormal, or may change from abnormal to normal. Therefore, the dynamic adjustment of the SRS resource may also be divided into two types. The following provides detailed descriptions with reference to FIG. 3 and FIG. 4.

FIG. 3 is a schematic flowchart of another communication method according to an embodiment of this application. The communication method includes the following steps.

S301: A terminal sends second indication information to a base station.

The second indication information indicates an SRS transmit port switching mode supported by the terminal, the SRS transmit port switching mode supported by the terminal includes at least one antenna switching capability, the at least one antenna switching capability included in the SRS transmit port switching mode supported by the terminal respectively corresponds to an SRS resource, and a maximum SRS resource is a first SRS resource.

S302: The terminal receives first antenna switching type SRS resource configuration information from the base station.

S303: The terminal sends an SRS based on an SRS resource allocated by using the first antenna switching type SRS resource configuration information.

S304: If the terminal determines that a preset condition is satisfied, the terminal sends first indication information to the base station.

In this case, the first indication information is used for reducing SRS resources of the terminal.

There may be a plurality of algorithms for allocating the SRS resources by the base station to the terminal. Therefore, to reduce the SRS resources of the terminal, different SRS resource allocation algorithms may be implemented by using the following different methods:
When the base station allocates the SRS resources to the terminal based on a maximum antenna switching capability reported by the terminal, the first indication information indicates an updated SRS transmit port switching mode supported by the terminal, the updated SRS transmit port switching mode supported by the terminal includes at least one antenna switching capability, the at least one antenna switching capability included in the updated SRS transmit port switching mode supported by the terminal respectively corresponds to an SRS resource, and a maximum SRS resource is less than the first SRS resource. In this case, the SRS resources allocated to the terminal may be correspondingly reduced.

Certainly, there are still a plurality of algorithms for allocating the SRS resources by the base station to the terminal. For example, the base station may allocate the SRS resources to the terminal based on the maximum antenna switching capability reported by the terminal; or may allocate the SRS resources to the terminal based on an intermediate value or an average value of a plurality of antenna switching capabilities reported by the terminal; or may allocate the SRS resources to the terminal based on a service type of the terminal, for example, a heavy -traffic service/a light-traffic service, or a high-speed service/a low-speed service. To ensure that the base station reduces the SRS resources allocated to the terminal, the first indication information indicates an updated SRS transmit port switching mode supported by the terminal, the updated SRS transmit port switching mode supported by the terminal includes at least one antenna switching capability, SRS resources respectively corresponding to the at least one antenna switching capability included in the updated SRS transmit port switching mode supported by the terminal are all less than the first SRS resource. In this way, regardless of an algorithm used by a network device to allocate the SRS resources, after the network device receives the first indication information, the network device reduces the SRS resources allocated to the terminal.

The preset condition includes at least one of the following:
A temperature of the terminal reaches a preset temperature. The preset temperature herein may be one value, or may be a plurality of values, and corresponding adjustment of the SRS resources may also be divided into a plurality of levels. For example, when the temperature of the terminal reaches 40°C, the allocated SRS resources are reduced. When the temperature of the terminal reaches 60°C, the allocated SRS resources may be further reduced. When the temperature decreases, the adjustment of the SRS resources may also be divided into a plurality of levels.

Battery power of the terminal reaches preset battery power. The preset temperature herein may be one value, or may be a plurality of values, and corresponding adjustment of the SRS resources may also be divided into a plurality of levels. For example, when the battery power of the terminal is reduced to 20%, the allocated SRS resources are reduced. When the battery power of the terminal is reduced to 5%, the allocated SRS resources may be further reduced. When the battery power is increased, the adjustment of the SRS resources may also be divided into a plurality of levels.

At least one antenna of the terminal is faulty. Herein, the corresponding adjustment of the SRS resources may be divided into a plurality of levels based on a quantity of faulty antennas. For example, when there is one faulty antenna, the allocated SRS resources are reduced. When there are two faulty antennas, the allocated SRS resources may be further reduced. When the faulty antenna recovers, the adjustment of the SRS resources may also be divided into a plurality of levels based on a quantity of recovered antennas.

S305: The terminal receives second antenna switching type SRS resource configuration information from the base station.

An SRS resource allocated by the base station to the terminal in the second antenna switching type SRS resource configuration information is less than an SRS resource currently used by the terminal.

For example, for an AS-type SRS user that supports antenna switching capabilities of t1r1, t2r2, and t2r4, if an antenna switching capability corresponding to an SRS resource initially allocated by the base station to the terminal is t2r4 (to be specific, two SRS resources, and a port quantity corresponding to each SRS resource is four), the SRS resource allocated to the terminal may be adjusted when the terminal satisfies the foregoing preset condition. For example, an antenna switching capability corresponding to an adjusted SRS resource is t2r2 (to be specific, one SRS resource, and a port quantity corresponding to the SRS resource is two) or t1r1 (to be specific, one SRS resource, and a port quantity corresponding to the SRS resource is one).

For a CB-type SRS user, if the base station initially allocates an SRS resource whose port quantity is four to the terminal, the SRS resource allocated to the terminal may be adjusted when the terminal satisfies the foregoing preset condition. For example, a port quantity of the adjusted SRS resource is two or one.

For a nonCB-type SRS user, if the base station initially allocates an SRS resource whose port quantity is four to the terminal, the SRS resource allocated to the terminal may be adjusted when the terminal satisfies the foregoing preset condition. For example, a port quantity of the adjusted SRS resource is two or one.

In the foregoing adjustment manner, for the terminal with a reduced capability or a reduced requirement, the allocated SRS resources may be dynamically reduced, so that a user capacity of the base station can be expanded. This helps a newly accessed terminal obtain sufficient SRS resources and improves SRS resource allocation flexibility and SRS resource utilization.

FIG. 4 is a schematic flowchart of still another communication method according to an embodiment of this application. The communication method includes the following steps.

S401: A terminal sends second indication information to a network device.

The second indication information indicates an SRS transmit port switching mode supported by the terminal, the SRS transmit port switching mode supported by the terminal includes at least one antenna switching capability, the at least one antenna switching capability included in the SRS transmit port switching mode supported by the terminal respectively corresponds to an SRS resource, and a maximum SRS resource is a first SRS resource.

S402: If the terminal originally satisfying a preset condition determines that the preset condition is not currently satisfied, the terminal sends first indication information to the network device.

In this case, the first indication information is used for increasing SRS resources of the terminal.

There may be a plurality of algorithms for allocating the SRS resources by the base station to the terminal. Therefore, to increase the SRS resources of the terminal, different SRS resource allocation algorithms may be implemented by using the following different methods:
When the base station allocates the SRS resources to the terminal based on a maximum antenna switching capability reported by the terminal, the first indication information indicates an updated SRS transmit port switching mode supported by the terminal, the updated SRS transmit port switching mode supported by the terminal includes at least one antenna switching capability, the at least one antenna switching capability included in the updated SRS transmit port switching mode supported by the terminal respectively corresponds to an SRS resource, and a maximum SRS resource is greater than the first SRS resource. In this case, the SRS resources allocated to the terminal may be correspondingly increased.

Certainly, there are still a plurality of algorithms for allocating the SRS resources by the base station to the terminal. For example, the base station may allocate the SRS resources to the terminal based on the maximum antenna switching capability reported by the terminal; or may allocate the SRS resources to the terminal based on an intermediate value or an average value of a plurality of antenna switching capabilities reported by the terminal; or may allocate the SRS resources to the terminal based on a service type of the terminal, for example, a heavy -traffic service/a light-traffic service, or a high-speed service/a low-speed service. To ensure that the base station increases the SRS resources allocated to the terminal, the first indication information indicates an updated SRS transmit port switching mode supported by the terminal, the updated SRS transmit port switching mode supported by the terminal includes at least one antenna switching capability, SRS resources respectively corresponding to the at least one antenna switching capability included in the updated SRS transmit port switching mode supported by the terminal are all greater than the first SRS resource.

In this way, regardless of an algorithm used by the network device to allocate the SRS resources, after the network device receives the first indication information, the network device increases the SRS resources allocated to the terminal.

The preset condition includes at least one of the following:
a temperature of the terminal reaches a preset temperature;
battery power of the terminal reaches preset battery power;
at least one antenna of the terminal is faulty; or
duration used by the terminal to access the base station is less than preset duration.

The preset duration herein may be one value, or may be a plurality of values, and corresponding adjustment of the SRS resources may also be divided into a plurality of levels.

S403: The terminal receives antenna switching type SRS resource configuration information from the base station.

An SRS resource allocated by the base station to the terminal in the antenna switching type SRS resource configuration information is greater than an SRS resource currently used by the terminal.

For example, for an AS-type SRS user that supports antenna switching capabilities of t1r1 and t2r2, if an antenna switching capability corresponding to an SRS resource initially allocated by the base station to the terminal is t2r2 (to be specific, one SRS resource, and a port quantity corresponding to each SRS resource is two), the SRS resource allocated to the terminal may be adjusted when the terminal does not satisfy the foregoing preset condition. For example, an antenna switching capability corresponding to an adjusted SRS resource is t2r4 (to be specific, two SRS resources, and a port quantity corresponding to each SRS resource is four).

For a CB-type SRS user, if the base station initially allocates an SRS resource whose port quantity is one to the terminal, the SRS resource allocated to the terminal may be adjusted when the terminal does not satisfy the foregoing preset condition. For example, a port quantity of the adjusted SRS resource is two or four.

For a nonCB-type SRS user, if the base station initially allocates an SRS resource whose port quantity is one to the terminal, the SRS resource allocated to the terminal may be adjusted when the terminal does not satisfy the foregoing preset condition. For example, a port quantity of the adjusted SRS resource is two or four.

In the foregoing adjustment manner, for the terminal with an improved capability or a recovered requirement, the allocated SRS resources may be dynamically increased, so that a throughput and communication quality of the terminal may be improved. This improves SRS resource allocation flexibility and SRS resource utilization.

When the terminal satisfies the preset condition again, the terminal may send the indication information again with reference to the steps in the embodiment in FIG. 3, so that the base station reduces the allocated SRS resources.

It should be noted that in the embodiments in FIG. 3 and FIG. 4 of this application, the allocated SRS resources are usually reduced when a terminal capability is reduced, and the allocated SRS resources are increased when the terminal capability is improved. In some other communication scenarios such as a satellite communication scenario, to ensure the communication quality and normal communication of the terminal, the allocated SRS resources may also be increased when the terminal capability is reduced. This is not limited in embodiments of this application.

In addition, the manner described in embodiments of this application is used for dynamically adjusting the allocated SRS resources, and also may be used for dynamically adjusting another allocated resource based on a capability change of the terminal. This is not limited in embodiments of this application.

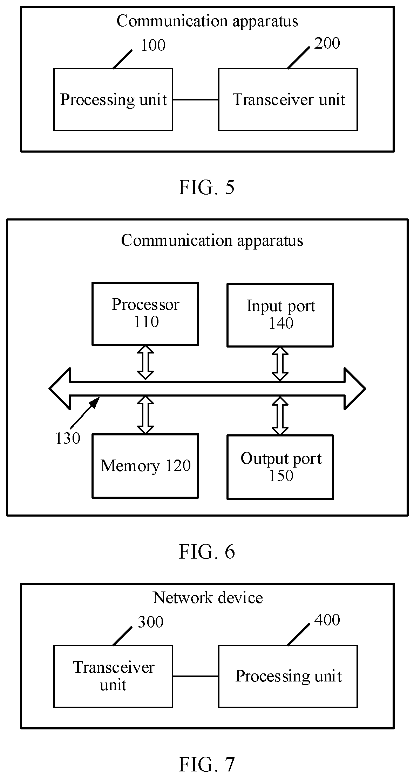

FIG. 5 is a schematic diagram of composition of a communication apparatus according to an embodiment of this application. The communication apparatus includes:
a processing unit 100, configured to generate first indication information, where the first indication information indicates an updated SRS transmit port switching mode supported by the communication apparatus, and the updated SRS transmit port switching mode supported by the communication apparatus includes at least one antenna switching capability; and
a transceiver unit 200, configured to: send the first indication information to a network device, and receive antenna switching type SRS resource configuration information from the network device.

Optionally, the transceiver unit 200 is specifically configured to:
if the communication apparatus determines that a preset condition is satisfied, send the first indication information to the network device, where
the preset condition includes at least one of the following:
   a temperature of the communication apparatus reaches a preset temperature;
   battery power of the communication apparatus reaches preset battery power; or
   at least one antenna of the communication apparatus is faulty.

Optionally, before that a transceiver unit 200 sends the first indication information to a network device, the transceiver unit 200 is further configured to:
send second indication information to the network device, where the second indication information indicates an SRS transmit port switching mode supported by the communication apparatus, the SRS transmit port switching mode supported by the communication apparatus includes at least one antenna switching capability, the at least one antenna switching capability included in the SRS transmit port switching mode supported by the communication apparatus respectively corresponds to an SRS resource, and a maximum SRS resource is a first SRS resource; and
a maximum SRS resource corresponding to the at least one antenna switching capability included in the updated SRS transmit port switching mode supported by the communication apparatus is less than the first SRS resource.

Optionally, the transceiver unit 200 is specifically configured to:
if the communication apparatus determines that a preset condition is not satisfied, send the first indication information to the network device, where
the preset condition includes at least one of the following:
a temperature of the communication apparatus reaches a preset temperature;
battery power of the communication apparatus reaches preset battery power;
at least one antenna of the communication apparatus is faulty; or
duration used by the communication apparatus to access the network device is less than preset duration.

Optionally, before that a transceiver unit 200 sends the first indication information to a network device, the transceiver unit is further configured to:
send second indication information to the network device, where the second indication information indicates an SRS transmit port switching mode supported by the communication apparatus, the SRS transmit port switching mode supported by the communication apparatus includes at least one antenna switching capability, the at least one antenna switching capability included in the SRS transmit port switching mode supported by the communication apparatus respectively corresponds to an SRS resource, and a maximum SRS resource is a first SRS resource; and
a maximum SRS resource corresponding to the at least one antenna switching capability included in the updated SRS transmit port switching mode supported by the communication apparatus is greater than the first SRS resource.

Optionally, the first indication information is carried in user equipment assistance information or overheating assistance information.

Optionally, a size of the SRS resource corresponding to the antenna switching capability is related to a quantity of SRS resources and a port quantity of the SRS resources.

Optionally, the communication apparatus is a terminal, and the network device is a base station.

FIG. 6 is a schematic diagram of composition of another communication apparatus according to an embodiment of this application. As shown in FIG. 6, the communication apparatus may include a processor 110, a memory 120, and a transceiver 130. The processor 110, the memory 120, and the transceiver 130 are connected by using a bus 140. The memory 120 is configured to store instructions, and the processor 110 is configured to execute the instructions stored in the memory 120, to implement the steps performed by the terminal in the methods corresponding to FIG. 2 to FIG. 4.

The processor 110 is configured to execute the instructions stored in the memory 120, to control the transceiver 130 to receive a signal and send a signal, and complete the steps performed by the terminal in the foregoing methods. The memory 120 may be integrated in the processor 110, or may be disposed separately from the processor 110.

In an implementation, it may be considered that a function of the transceiver unit 130 is implemented by using a transceiver circuit or a dedicated transceiver chip. It may be considered that the processor 110 is implemented by using a dedicated processing chip, a processing circuit, a processor, or a general-purpose chip.

In another implementation, it may be considered that the terminal provided in embodiments of this application is implemented by using a general-purpose computer. To be specific, program code for implementing functions of the processor 110 and the transceiver 130 is stored in the memory 120, and a general-purpose processor implements the functions of the processor 110 and the transceiver 130 by executing the code in the memory 120.

For concepts, explanations, detailed descriptions, and other steps of the communication apparatus that are related to the technical solutions provided in embodiments of this application, refer to the descriptions of the terminal in the foregoing methods or other embodiments. Details are not described herein again.

In another form of this embodiment, a computer-readable storage medium is provided. The computer-readable storage medium stores instructions. When the instructions are executed, the method on a terminal side in the foregoing method embodiments is performed.

In another form of this embodiment, a computer program product including instructions is provided. When the instructions are executed, the method on the terminal side in the foregoing method embodiments is performed.

FIG. 7 is a schematic diagram of composition of a network device according to an embodiment of this application. The network device includes:
a transceiver unit 300, configured to receive first indication information from a terminal, where the first indication information indicates an updated SRS transmit port switching mode supported by the terminal, and the updated SRS transmit port switching mode supported by the terminal includes at least one antenna switching capability; and
a processing unit 400, configured to generate, based on the first indication information, antenna switching type SRS resource configuration information to be sent to the terminal, where
the transceiver unit 300 is further configured to send the antenna switching type SRS resource configuration information to the terminal.

Optionally, an SRS resource allocated by the network device to the terminal in the antenna switching type SRS resource configuration information is less than an SRS resource currently used by the terminal.

Optionally, before that a transceiver unit 300 receives first indication information from a terminal, the transceiver unit 300 is further configured to:
receive second indication information from the terminal, where the second indication information indicates an SRS transmit port switching mode supported by the terminal, the SRS transmit port switching mode supported by the terminal includes at least one antenna switching capability, the at least one antenna switching capability included in the SRS transmit port switching mode supported by the terminal respectively corresponds to an SRS resource, and a maximum SRS resource is a first SRS resource; and
a maximum SRS resource corresponding to the at least one antenna switching capability included in the updated SRS transmit port switching mode supported by the terminal is less than the first SRS resource.

Optionally, an SRS resource allocated by the network device to the terminal in the antenna switching type SRS resource configuration information is greater than an SRS resource currently used by the terminal.

Optionally, before that a transceiver unit 300 receives first indication information from a terminal, the transceiver unit 300 is further configured to:
receive second indication information from the terminal, where the second indication information indicates an SRS transmit port switching mode supported by the terminal, the SRS transmit port switching mode supported by the terminal includes at least one antenna switching capability, the at least one antenna switching capability included in the SRS transmit port switching mode supported by the terminal respectively corresponds to an SRS resource, and a maximum SRS resource is a first SRS resource; and
a maximum SRS resource corresponding to the at least one antenna switching capability included in the updated SRS transmit port switching mode supported by the terminal is greater than the first SRS resource.

Optionally, the first indication information is carried in user equipment assistance information or overheating assistance information.

Optionally, a size of the SRS resource corresponding to the antenna switching capability is related to a quantity of SRS resources and a port quantity of the SRS resources.

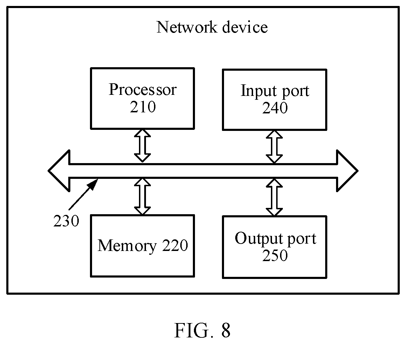

FIG. 8 is a schematic diagram of composition of another network device according to an embodiment of this application. As shown in FIG. 8, the network device may include a processor 210, a memory 220, and a transceiver 230. The processor 210, the memory 220, and the transceiver 230 are connected by using a bus 240. The memory 220 is configured to store instructions, and the processor 210 is configured to execute the instructions stored in the memory 220, to implement the steps performed by the base station in the methods corresponding to FIG. 2 to FIG. 4.

The processor 210 is configured to execute the instructions stored in the memory 220, to control the transceiver 230 to receive a signal and send a signal, and complete the steps performed by the base station in the foregoing methods. The memory 220 may be integrated in the processor 210, or may be disposed separately from the processor 210.

In an implementation, it may be considered that a function of the transceiver unit 230 is implemented by using a transceiver circuit or a dedicated transceiver chip. It may be considered that the processor 20 is implemented by using a dedicated processing chip, a processing circuit, a processor, or a general-purpose chip.

In another implementation, it may be considered that the base station provided in embodiments of this application is implemented by using a general-purpose computer. To be specific, program code for implementing functions of the processor 210 and the transceiver 230 is stored in the memory 220, and a general-purpose processor implements the functions of the processor 210 and the transceiver 230 by executing the code in the memory 220.

For concepts, explanations, detailed descriptions, and other steps of the network device that are related to the technical solutions provided in embodiments of this application, refer to the descriptions of the base stations in the foregoing methods or other embodiments. Details are not described herein again.

In another form of this embodiment, a computer-readable storage medium is provided. The computer-readable storage medium stores instructions. When the instructions are executed, the method on a base station side in the foregoing method embodiments is performed.

In another form of this embodiment, a computer program product including instructions is provided. When the instructions are executed, the method on the base station side in the foregoing method embodiments is performed.

According to the methods provided in embodiments of this application, an embodiment of this application further provides a system. The system includes the foregoing communication terminal, the foregoing network device, and the like.

A person skilled in the art may understand that, for ease of description, FIG. 6 and FIG. 8 show only one memory and only one processor. An actual controller may include a plurality of processors and a plurality of memories. The memory may also be referred to as a storage medium, a storage device, or the like. This is not limited in embodiments of this application.

It should be understood that, the processor in embodiments of this application may be a central processing unit (Central Processing Unit, CPU for short), or the processor may be another general-purpose processor, a digital signal processor (Digital Signal Processor, DSP for short), an application-specific integrated circuit (Application-Specific Integrated Circuit, ASIC for short), a field-programmable gate array (Field-Programmable Gate Array, FPGA for short) or another programmable logic device, a discrete gate or transistor logic device, a discrete hardware component, or the like.

It should be further understood that, the memory mentioned in embodiments of the present invention may be a volatile memory or a nonvolatile memory, or may include both a volatile memory and a nonvolatile memory. The nonvolatile memory may be a read-only memory (Read-Only Memory, ROM for short), a programmable read-only memory (Programmable ROM, PROM for short), an erasable programmable read-only memory (Erasable PROM, EPROM for short), an electrically erasable programmable read-only memory (Electrically EPROM, EEPROM for short), or a flash memory. The volatile memory may be a random access memory (Random Access Memory, RAM for short) and is used as an external cache. For example but not for limitative description, many forms of RAMs may be used, for example, a static random access memory (Static RAM, SRAM for short), a dynamic random access memory (Dynamic RAM, DRAM for short), a synchronous dynamic random access memory (Synchronous DRAM, SDRAM for short), a double data rate synchronous dynamic random access memory (Double Data Rate SDRAM, DDR SDRAM for short), an enhanced synchronous dynamic random access memory (Enhanced SDRAM, ESDRAM for short), a synchlink dynamic random access memory (Synchlink DRAM, SLDRAM for short), and a direct rambus random access memory (Direct Rambus RAM, DR RAM for short).

It should be noted that when the processor is a general-purpose processor, a DSP, an ASIC, an FPGA or another programmable logic device, a discrete gate, a transistor logic device, or a discrete hardware component, the memory (a storage module) is integrated in the processor.

It should be noted that the memory described in this specification aims to include but is not limited to these memories and any memory of another proper type.

In addition to a data bus, the bus may further include a power bus, a control bus, a status signal bus, and the like. However, for clear description, various types of buses in the figures are marked as the bus.

It should be further understood that "first", "second", "third", "fourth", and various numbers in this specification are merely used for differentiation for ease of description, and are not intended to limit the scope of this application.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

Sequence numbers of the foregoing processes do not mean execution sequences in embodiments of this application. The execution sequences of the processes should be determined based on functions and internal logic of the processes, and should not be constructed as any limitation on the implementation processes of embodiments of this application.

A person of ordinary skill in the art may be aware that, various illustrative logical blocks (illustrative logical block, ILB for short) and steps that are described with reference to embodiments disclosed in this specification may be implemented by using electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into units is merely logical function division and may be other division in actual implementations. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in embodiments of this application may be integrated into one processing unit, each of the units may exist alone physically, or two or more units may be integrated into one unit.

All or a part of the foregoing embodiments may be implemented by using software, hardware, firmware, or any combination thereof. When software is used for implementation, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk), or the like.

## Claims

1. A communication method performed by a terminal, the method comprising the steps of:
• if the terminal determines that at least one antenna is faulty, sending (S 304) first indication information to a network device, wherein the first indication information indicates an updated SRS transmit port switching mode supported by the terminal, and the updated SRS transmit port switching mode supported by the terminal comprises at least one antenna switching capability;
• receiving (S 305), from the network device, configuration information of SRS resources allocated to the terminal by the network device, wherein the SRS resources allocated to the terminal by the network device are adjusted SRS resources, wherein the adjusted SRS resources are less than SRS resources the terminal currently uses, and an extend of the adjustment of the SRS resources is divided into a plurality of levels based on a quantity of faulty antennas of the terminal, wherein the higher the quantity of faulty antennas of the terminal is, the less SRS resources are allocated within the framework of the adjustment of the SRS resources to the terminal.

2. The method according to claim 1, wherein, before the sending (S201) first indication information to the network device, the method further comprises:
∘ sending (S 301) second indication information to the network device, wherein the second indication information indicates an SRS transmit port switching mode supported by the terminal, the SRS transmit port switching mode supported by the terminal comprises at least one antenna switching capability, the at least one antenna switching capability comprised in the SRS transmit port switching mode supported by the terminal respectively corresponds to an SRS resource, and a maximum SRS resource is a first SRS resource, and a maximum SRS resource corresponding to the at least one antenna switching capability comprised in the updated SRS transmit port switching mode supported by the terminal is less than the first SRS resource.

3. The method according to any one of claims 1 or 2, wherein the first indication information is carried in user equipment assistance information.

4. The method according to claim 2, wherein a size of the SRS resource corresponding to the antenna switching capability is related to a quantity of SRS resources and a port quantity of the SRS resources.

5. A communication method performed by a network device, the method comprising the steps of:
• receiving first indication information from a terminal, wherein the first indication information indicates an updated SRS transmit port switching mode supported by the terminal, and the updated SRS transmit port switching mode supported by the terminal comprises at least one antenna switching capability;
• determining configuration information of SRS resources allocated to the terminal by the network device based on the received first indication information, wherein the SRS resources allocated to the terminal by the network device are adjusted SRS resources, wherein the adjusted SRS resources are less than SRS resources the terminal currently uses, and an extend of the adjustment of the SRS resources is divided into a plurality of levels based on a quantity of faulty antennas of the terminal, wherein the higher the quantity of faulty antennas of the terminal is, the less SRS resources are allocated within the framework of the adjustment of the SRS resources to the terminal; and
• sending the configuration information to the terminal.

6. The method according to claim 5, wherein, before the receiving the first indication information from the terminal, the method further comprises:
∘ receiving second indication information from the terminal, wherein the second indication information indicates an SRS transmit port switching mode supported by the terminal, the SRS transmit port switching mode supported by the terminal comprises at least one antenna switching capability, the at least one antenna switching capability comprised in the SRS transmit port switching mode supported by the terminal respectively corresponds to an SRS resource, and a maximum SRS resource is a first SRS resource, and a maximum SRS resource corresponding to the at least one antenna switching capability comprised in the updated SRS transmit port switching mode supported by the terminal is less than the first SRS resource.

7. The method according to claim 5 or 6, wherein the first indication information is carried in user equipment assistance information.

8. The method according to claim 6, wherein a size of the SRS resource corresponding to the antenna switching capability is related to a quantity of SRS resources and a port quantity of the SRS resources.

9. A terminal configured to perform the method according to any of claims 1 to 4.

10. A network device configured to perform the method according to any of claims 5 to 8.

11. A computer program product, wherein the computer program product comprises computer program code, and when the computer program code is run on a computer, the computer is caused to perform the method according to any of claims 1 to 4.

12. A computer program product, wherein the computer program product comprises computer program code, and when the computer program code is run on a computer, the computer is caused to perform the method according to any of claims 5 to 8.

## Patentansprüche

1. Kommunikationsverfahren, das von einem Endgerät durchgeführt wird, wobei das Verfahren die folgenden Schritte umfasst:
• Senden (S 304) von ersten Angabeinformationen an eine Netzwerkvorrichtung, wenn das Endgerät feststellt, dass mindestens eine Antenne fehlerhaft ist, wobei die ersten Angabeinformationen einen aktualisierten, von dem Endgerät unterstützten SRS-Übertragungsport-Umschaltmodus angeben und der aktualisierte von dem Endgerät unterstützte SRS-Übertragungsport-Umschaltmodus mindestens eine Antennenumschaltfunktion umfasst;
• Empfangen (S 305) von Konfigurationsinformationen von SRS-Ressourcen, die dem Endgerät durch die Netzwerkvorrichtung zugewiesen wurden, von der Netzwerkvorrichtung, wobei die dem Endgerät durch die Netzwerkvorrichtung zugewiesenen SRS-Ressourcen angepasste SRS-Ressourcen sind, wobei die angepassten SRS-Ressourcen weniger SRS-Ressourcen sind, als diejenigen, die das Endgerät derzeit verwendet, und ein Ausmaß der Anpassung der SRS-Ressourcen basierend auf einer Anzahl fehlerhafter Antennen des Endgeräts in eine Vielzahl von Stufen unterteilt ist, wobei dem Endgerät im Rahmen der Anpassung der SRS-Ressourcen umso weniger SRS-Ressourcen zugewiesen werden, je höher die Anzahl fehlerhafter Antennen des Endgeräts ist.

2. Verfahren nach Anspruch 1, wobei das Verfahren vor dem Senden (S201) von ersten Angabeinformationen an die Netzwerkvorrichtung ferner Folgendes umfasst:
o Senden (S 301) von zweiten Angabeinformationen an die Netzwerkvorrichtung, wobei die zweiten Angabeinformationen einen von dem Endgerät unterstützten SRS-Übertragungsport-Umschaltmodus angeben, wobei der von dem Endgerät unterstützte SRS-Übertragungsport-Umschaltmodus mindestens eine Antennenumschaltfähigkeit umfasst, wobei die in dem von dem Endgerät unterstützten SRS-Übertragungsport-Umschaltmodus umfasste mindestens eine Antennenumschaltfähigkeit jeweils einer SRS-Ressource entspricht, und eine maximale SRS-Ressource eine erste SRS-Ressource ist, und eine maximale SRS-Ressource, die der in dem von dem Endgerät unterstützten SRS-Übertragungsport-Umschaltmodus umfassten mindestens einen Antennenumschaltfähigkeit entspricht, weniger ist als die erste SRS-Ressource.

3. Verfahren nach einem der Ansprüche 1 oder 2, wobei die ersten Angabeinformationen in Benutzergeräte-Hilfeinformationen enthalten sind.

4. Verfahren nach Anspruch 2, wobei eine Größe der SRS-Ressource, die der Antennenumschaltfähigkeit entspricht, eine Anzahl von SRS-Ressourcen und eine Portanzahl der SRS-Ressourcen betrifft.

5. Kommunikationsverfahren, das von einer Netzwerkvorrichtung durchgeführt wird, wobei das Verfahren die folgenden Schritte umfasst:
• Empfangen erster Angabeinformationen von einem Endgerät, wobei die ersten Angabeinformationen einen von dem Endgerät unterstützten aktualisierten SRS-Übertragungsport-Umschaltmodus angeben, und der von dem Endgerät unterstützte aktualisierte SRS-Übertragungsport-Umschaltmodus mindestens eine Antennenumschaltfunktion umfasst;
• Feststellen von Konfigurationsinformationen von SRS-Ressourcen, die dem Endgerät durch die Netzwerkvorrichtung basierend auf den empfangenen ersten Angabeinformationen zugewiesen wurden, wobei die dem Endgerät durch die Netzvorrichtung zugewiesenen SRS-Ressourcen angepasste SRS-Ressourcen sind, wobei die angepassten SRS-Ressourcen weniger SRS-Ressourcen sind, als diejenigen, die das Endgerät derzeit verwendet, und ein Ausmaß der Anpassung der SRS-Ressourcen basierend auf einer Anzahl fehlerhafter Antennen des Endgeräts in eine Vielzahl von Stufen unterteilt ist, wobei dem Endgerät im Rahmen der Anpassung der SRS-Ressourcen umso weniger SRS-Ressourcen zugewiesen werden, je höher die Anzahl fehlerhafter Antennen des Endgeräts ist; und
• Senden der Konfigurationsinformationen an das Endgerät.

6. Verfahren nach Anspruch 5, wobei das Verfahren vor dem Empfangen der ersten Angabeinformationen von dem Endgerät ferner umfasst:
∘ Empfangen von zweiten Angabeinformationen von dem Endgerät, wobei die zweiten Angabeinformationen einen von dem Endgerät unterstützten SRS-Übertragungsport-Umschaltmodus angeben, wobei der von dem Endgerät unterstützte SRS-Übertragungsport-Umschaltmodus mindestens eine Antennenumschaltfähigkeit umfasst, wobei die in dem von dem Endgerät unterstützten SRS-Übertragungsport-Umschaltmodus umfasste mindestens eine Antennenumschaltfähigkeit jeweils einer SRS-Ressource entspricht, und eine maximale SRS-Ressource eine erste SRS-Ressource ist, und eine maximale SRS-Ressource, die der in dem von dem Endgerät unterstützten SRS-Übertragungsport-Umschaltmodus umfassten mindestens einen Antennenumschaltfähigkeit entspricht, weniger ist als die erste SRS-Ressource.

7. Verfahren nach Anspruch 5 oder 6, wobei die ersten Angabeinformationen in Benutzergerät-Hilfeinformationen enthalten sind.

8. Verfahren nach Anspruch 6, wobei eine Größe der SRS-Ressource, die der Antennenumschaltfähigkeit entspricht, eine Anzahl von SRS-Ressourcen und eine Portanzahl der SRS-Ressourcen betrifft.

9. Endgerät, das konfiguriert ist, um das Verfahren nach einem der Ansprüche 1 bis 4 durchzuführen.

10. Netzwerkvorrichtung, die konfiguriert ist, um das Verfahren nach einem der Ansprüche 5 bis 8 durchzuführen.

11. Computerprogrammprodukt, wobei das Computerprogrammprodukt Computerprogrammcode umfasst und, wobei wenn der Computerprogrammcode auf einem Computer ausgeführt wird, der Computer dazu veranlasst wird, das Verfahren gemäß einem der Ansprüche 1 bis 4 durchzuführen.

12. Computerprogrammprodukt, wobei das Computerprogrammprodukt Computerprogrammcode umfasst und, wobei wenn der Computerprogrammcode auf einem Computer ausgeführt wird, der Computer dazu veranlasst wird, das Verfahren gemäß einem der Ansprüche 5 bis 8 durchzuführen.

## Revendications

1. Procédé de communication réalisé par un terminal, le procédé comprenant les étapes consistant à :
• si le terminal détermine qu'au moins une antenne est défectueuse, envoyer (S 304) des premières informations d'indication à un dispositif de réseau, dans lequel les premières informations d'indication indiquent un mode de commutation de port de transmission SRS mis à jour pris en charge par le terminal, et le mode de commutation de port de transmission SRS mis à jour pris en charge par le terminal comprend au moins une capacité de commutation d'antenne ;
• recevoir (S 305), à partir du dispositif de réseau, des informations de configuration de ressources SRS allouées au terminal par le dispositif de réseau, dans lequel les ressources SRS allouées au terminal par le dispositif de réseau sont des ressources SRS ajustées, dans lequel les ressources SRS ajustées sont inférieures aux ressources SRS que le terminal utilise actuellement, et un prolongement de l'ajustement des ressources SRS est divisé en une pluralité de niveaux sur la base d'une quantité d'antennes défectueuses du terminal, dans lequel plus la quantité d'antennes défectueuses du terminal est élevée, moins des ressources SRS sont allouées dans le cadre de l'ajustement des ressources SRS au terminal.

2. Procédé selon la revendication 1, dans lequel, avant l'envoi (S201) de premières informations d'indication au dispositif de réseau, le procédé comprend également :
o l'envoi (S 301) de secondes informations d'indication au dispositif de réseau, dans lequel les secondes informations d'indication indiquent un mode de commutation de port de transmission SRS pris en charge par le terminal, le mode de commutation de port de transmission SRS pris en charge par le terminal comprend au moins une capacité de commutation d'antenne, l'au moins une capacité de commutation d'antenne comprise dans le mode de commutation de port de transmission SRS pris en charge par le terminal correspond respectivement à une ressource SRS, et une ressource SRS maximale est une première ressource SRS, et une ressource SRS maximale correspondant à l'au moins une capacité de commutation d'antenne comprise dans le mode de commutation de port de transmission SRS mis à jour pris en charge par le terminal est inférieure à la première ressource SRS.

3. Procédé selon l'une quelconque des revendications 1 ou 2, dans lequel les premières informations d'indication sont transportées dans des informations d'assistance d'équipement utilisateur.

4. Procédé selon la revendication 2, dans lequel une taille de la ressource SRS correspondant à la capacité de commutation d'antenne est liée à une quantité de ressources SRS et à une quantité de ports des ressources SRS.

5. Procédé de communication réalisé par un dispositif de réseau, le procédé comprenant les étapes consistant à :
• recevoir des premières informations d'indication à partir d'un terminal, dans lequel les premières informations d'indication indiquent un mode de commutation de port de transmission SRS mis à jour pris en charge par le terminal, et le mode de commutation de port de transmission SRS mis à jour pris en charge par le terminal comprend au moins une capacité de commutation d'antenne ;
• déterminer des informations de configuration de ressources SRS allouées au terminal par le dispositif de réseau sur la base des premières informations d'indication reçues, dans lequel les ressources SRS allouées au terminal par le dispositif de réseau sont des ressources SRS ajustées, dans lequel les ressources SRS ajustées sont inférieures aux ressources SRS que le terminal utilise actuellement, et un prolongement de l'ajustement des ressources SRS est divisé en une pluralité de niveaux sur la base d'une quantité d'antennes défectueuses du terminal, dans lequel plus la quantité d'antennes défectueuses du terminal est élevée, moins des ressources SRS sont allouées dans le cadre de l'ajustement des ressources SRS au terminal ; et
• envoyer les informations de configuration au terminal.

6. Procédé selon la revendication 5, dans lequel, avant la réception des premières informations d'indication à partir du terminal, le procédé comprend également :
o la réception de secondes informations d'indication à partir du terminal, dans lequel les secondes informations d'indication indiquent un mode de commutation de port de transmission SRS pris en charge par le terminal, le mode de commutation de port de transmission SRS pris en charge par le terminal comprend au moins une capacité de commutation d'antenne, l'au moins une capacité de commutation d'antenne comprise dans le mode de commutation de port de transmission SRS pris en charge par le terminal correspond respectivement à une ressource SRS, et une ressource SRS maximale est une première ressource SRS, et une ressource SRS maximale correspondant à l'au moins une capacité de commutation d'antenne comprise dans le mode de commutation de port de transmission SRS mis à jour pris en charge par le terminal est inférieure à la première ressource SRS.

7. Procédé selon la revendication 5 ou 6, dans lequel les premières informations d'indication sont transportées dans des informations d'assistance d'équipement utilisateur.

8. Procédé selon la revendication 6, dans lequel une taille de la ressource SRS correspondant à la capacité de commutation d'antenne est liée à une quantité de ressources SRS et à une quantité de ports des ressources SRS.

9. Terminal configuré pour réaliser le procédé selon l'une quelconque des revendications 1 à 4.

10. Dispositif de réseau configuré pour réaliser le procédé selon l'une quelconque des revendications 5 à 8.

11. Produit de programme informatique, dans lequel le produit de programme informatique comprend un code de programme informatique, et lorsque le code de programme informatique est exécuté sur un ordinateur, l'ordinateur est amené à réaliser le procédé selon l'une quelconque des revendications 1 à 4.

12. Produit de programme informatique, dans lequel le produit de programme informatique comprend un code de programme informatique, et lorsque le code de programme informatique est exécuté sur un ordinateur, l'ordinateur est amené à réaliser le procédé selon l'une quelconque des revendications 5 à 8.
